# EUROPEAN PATENT SPECIFICATION

(11) **EP 2 796 328 B1**
(45) Date of publication and mention of the grant of the patent: **23.12.2015**
(21) Application number: 13165250.5
(22) Date of filing: 24.04.2013
(51) Int. Cl.: B60R 21/38

(54) **Automobile hood active hinge device**
Aktive Automobilhaubenscharniervorrichtung
Dispositif de charnière active de capot automobile

(43) Date of publication of application: 29.10.2014
(73) Proprietor: Gumchang Co., Ltd., Yeongcheon-si, Gyeongsangbuk-do (KR)
(72) Inventor: Song, Jae Yeol, Daegu (KR)
(74) Representative: Kacsuk, Zsófia

(56) References cited:
- EP-A1- 1 785 319
- GB-A- 590 253

## Description

### Technical Field

The present invention relates to an automobile hood active hinge device that is applied to both of a hinge type opening hood and a link type hinge opening hood through which the hood is open at the front side thereof, and more particularly, to an automobile hood active hinge device that is capable of rapidly cutting a safety pin when an automobile collides against a pedestrian, so that the rear end portion of a hood is raised to develop an air bag, thereby releasing the impact applied to the pedestrian's head and ensuring the safety of the pedestrian.

### Background Art

As well known, a hood of an automobile is mounted to a body of the automobile by means of hinges so as to open and close an engine room, and typically, if the weight of the hood is light, hinge type opening and closing is conducted, whereas if the weight and strength of the hood are increased, link type hinge opening and closing is conducted.

Recently, there have been proposed various technologies related to active hood hinges or pop-up hood hinges capable of ensuring a pedestrian's safety. Referring to such technologies, when an automobile collides against a pedestrian during driving, so as to prevent the pedestrian's head from being injured by means of the collision between his or her head and a hood or between his or her head and the front glass of the automobile, the rear end portion of the hood is raised to provide the impact-absorbing space, and an air bag is developed to the front glass of the automobile through the space formed by raising the rear end portion of the hood.

As one example of the prior art, there is proposed Korean Patent No. 10-0774772 disclosing an active hood hinge device that is applied to a four-bar link type hood hinge and configured complicatedly to have three link members and four hinge pins, thereby increasing the production cost and failing to achieve the lightness of the automobile, and to primarily raise the inside and outside hinge members at the time of the operation thereof and to secondarily raise the rear end portion of the hood, thereby delaying the time in raising the rear end portion of the hood.

As another example of the prior art, there is proposed Korean Patent No. 10-0726165 disclosing an automobile hood active hinge device that is configured simply to have a first link hinge-coupled to a body of an automobile, a second link hinge-coupled to the end portion of the first link, a bracket hinge-coupled to the end portion of the second link and fixed to the underside of a hood, and fixing pins located to the hinge portion between the first link and the second link and the hinge portion between the second link and the bracket in such a manner as to restrict free rotation under given torque. However, the fixing pins are two and very small in size, thereby causing the assembling to be not easy, and as the duration in use is passed, further, the coupling states by means of the fixing pins are not rigidly maintained due to the decrement of the durability of the fixing pins.

So as to remove the problems as mentioned above, if the diameters of the fixing pins are enlarged, the stiffness of the fixing pins is too strong to cause the cutting of the fixing pins for operating the active hinge device to be not easy, thereby reducing the reliability of the operation thereof.

So as to remove the problems as mentioned above, on the other hand, if the fixing pins are made of aluminum, both of the easiness of the assembling and the adequate stiffness of the fixing pins are all achieved, but the aluminum fixing pins are oxidized in air or they become conductive due to the electricity flowing on the automobile body during driving, which causes the corrosion on the fixing pins and further reduces the durability of the fixing pins, thereby resulting in the decrement of the reliability of operation and the durability of the active hinge device. As mentioned above, accordingly, it can be understood that the conventional active hinge devices have had structural problems.

As another example of the prior art EP 1 785 319 proposes a hinge for a vehicle flip-up hood, which hinge has a releasable, actively connected lever arm, which is stored in a slot hole arranged in a lower hinge part by a connecting bolt. In the locked original position, a locking unit and a first bore arranged in the lever arm are connected with the lower hinge part, arranged at the car body, by a controllable locking bolt. In the lift extended position, the lever arm and second bore arranged in the lever arm are connected with lower hinge part by the locking bolt. The problems associated with this solution are that it has a complex structure, the control of the locking bolt is difficult to achieve and the whole lever arm is lifted.

### Disclosure

### Technical Problem

Accordingly, the present invention has been made in view of the above-mentioned problems occurring in the prior art, and it is an object of the present invention to provide an automobile hood active hinge device that is configured simply to raise the rear end portion of the hood, thereby ensuring the easiness of the assembling and the durability of the device and accomplishing the lightness of an automobile, and that is capable of especially preventing the corrosion on a safety pin, thereby improving the durability of the device, and rapidly cutting the safety pin fixing a pick-up piece and an arm piece when the automobile collides against a pedestrian, thereby improving the reliability of the operation of the device and ensuring the safety of the pedestrian.

### Technical Solution

To accomplish the above object, according to the present invention, there is provided an automobile hood active hinge device including: an arm piece rotatably coupled to an automobile body fixing stand by means of a hood opening side hinge shaft; a pick-up piece rotatably coupled to the arm piece by means of an operating side hinge shaft in such a manner as to connect a hood to the top portion thereof; a bushing and a safety pin coupled to a coupling hole of the arm piece and a through-hole of the pick-up piece to fix or separate the arm piece and the pick-up piece to each other or from each other; and an actuator adapted to rapidly cut off the safety pin and the bushing and at the same time to raise the rear end portion of the hood at the time when an automobile collides against a pedestrian.

### Advantageous Effect

According to the present invention, the automobile hood active hinge device is configured simply to raise the rear end portion of the hood, to perform the rigid coupling or easy separation between the arm piece and the pick-up piece by means of the safety pin, and to prevent the corrosion on the safety pin by means of the bushing, thereby improving the durability thereof.

According to the automobile hood active hinge device, additionally, if an accident happens, the actuator is operated to raise the lower portion of the pick-up piece and thus to rapidly cut off the bushing and the safety pin, thereby reducing the time needed to raise the rear end portion of the hood, so that a pedestrian-protecting air bag is developed at a fast speed and an impact-absorbing space is formed to ensure the safety of the pedestrian.

### Description of Drawings

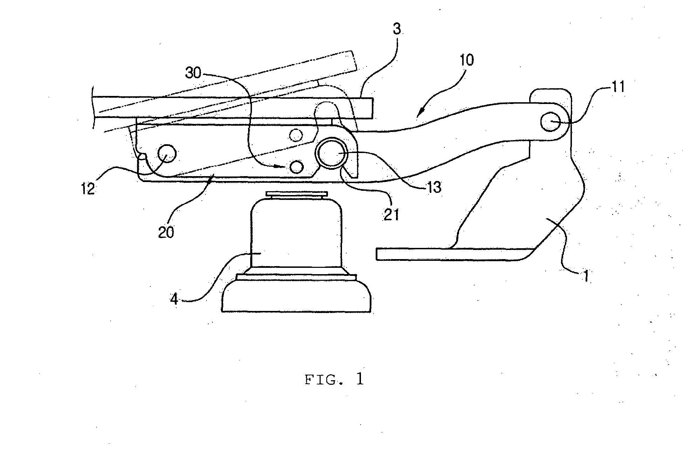

FIG.1 is an exemplary view showing an automobile hood active hinge device according to a first embodiment of the present invention applied to an automobile body fixing stand.

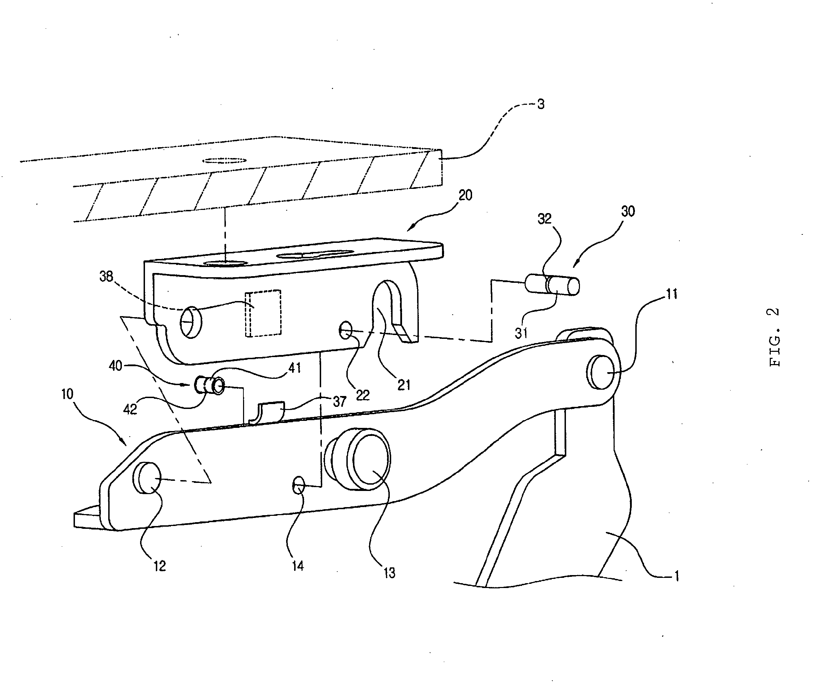

FIG.2 is an exploded perspective view showing the automobile hood active hinge device according to the first embodiment of the present invention.

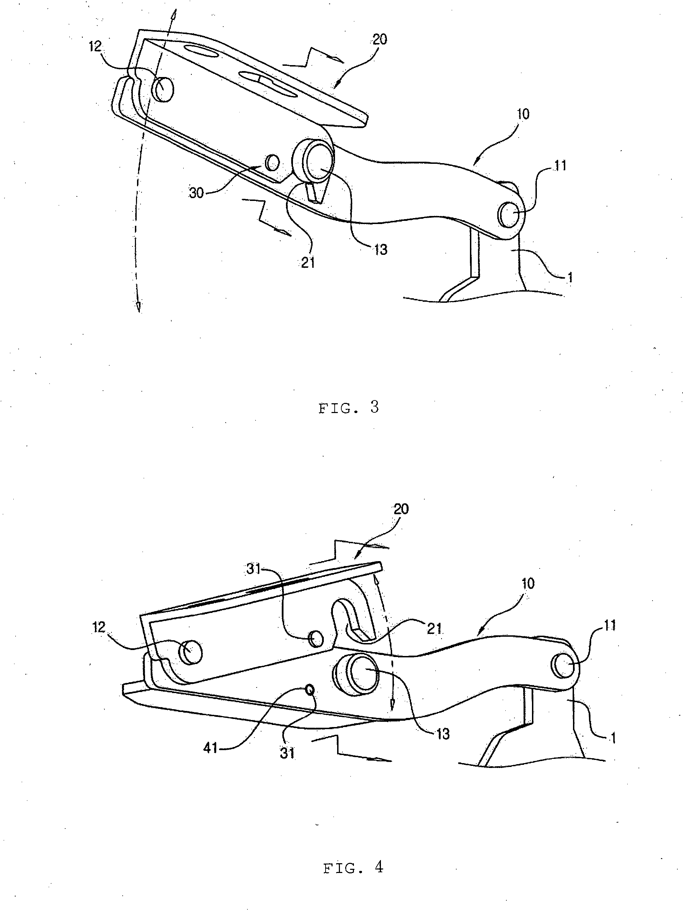

FIG.3 is a perspective view showing the operation of the active hinge device at the time when the hood is open.
FIG.4 is a perspective view showing the operation of the active hinge device at the time when the rear end portion of the hood is raised.

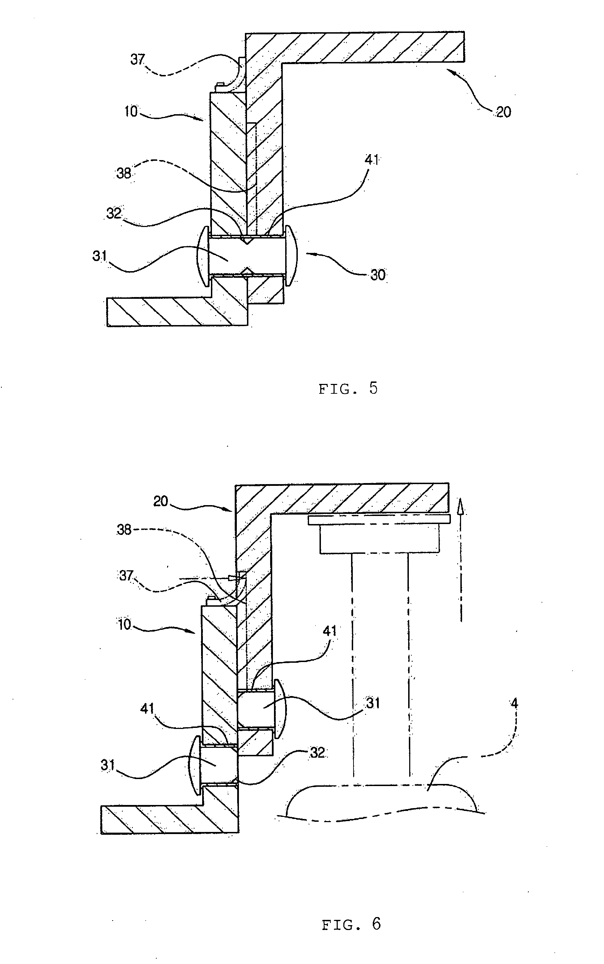

FIG.5 is a sectional view taken along the line A-A of FIG.3.
FIG.6 is a sectional view taken along the line B-B of FIG.4.

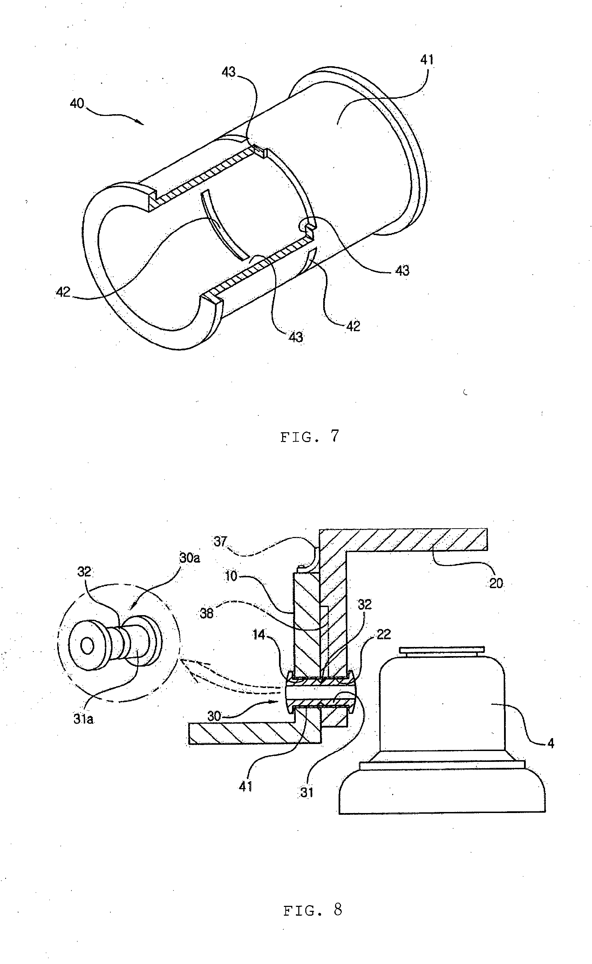

FIG.7 is a perspective view showing the partial section of a bushing in the active hinge device according to the present invention.
FIG.8 is an exemplary view showing an automobile hood active hinge device according to a second embodiment of the present invention.

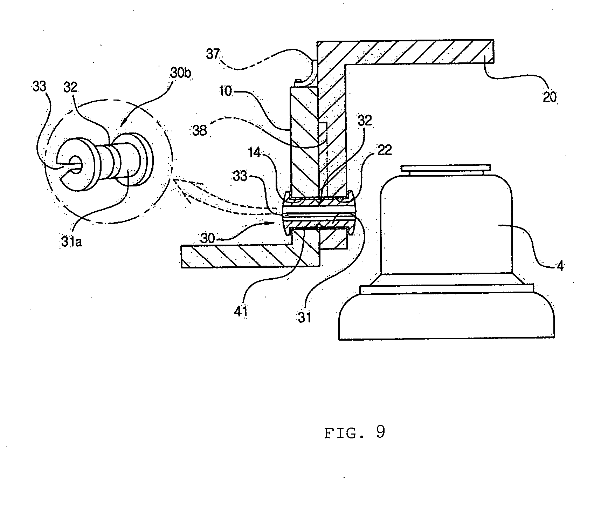

FIG.9 is an exemplary view showing an automobile hood active hinge device according to a third embodiment of the present invention.

### Best Mode for Invention

Hereinafter, an explanation on an automobile hood active hinge device according to the preferred embodiments of the present invention will be given with reference to the attached drawings.

As shown, an automobile hood active hinge device according to the present invention includes: an arm piece 10 coupled to an automobile body fixing stand 1; a pick-up piece 20 coupled to the arm piece 10; a safety pin 30 and a bushing 40 adapted to fix and separate the arm piece 10 and the pick-up piece 20 to and from each other; and an actuator 4.

The arm piece 10 is connected at one side thereof to the fixing stand 1 and a hood opening side hinge shaft 11 and connected at the other side thereof to the pick-up piece 20 by means of an operating side hinge shaft 12. Further, the arm piece 10 has a stopper 13 mounted in the middle portion thereof in such a manner as to couple a stopper locking groove 21 formed on the pick-up piece 20 thereto.

The pick-up piece 20 to which a hood 3 of an automobile is connected is coupled on one side thereof to the operating side hinge shaft 12 of the arm piece 10 and has the stopper locking groove 21 formed on the other side thereof in such a manner as to be coupled to the stopper 13 mounted on the arm piece 10. The pick-up piece 20 and the arm piece 10 have a coupling hole 14 and a through-hole 22 formed passed therethrough in such a manner as to coupledly insert the bushing 40 and the safety pin 30 thereinto, thereby fixing the arm piece 10 and the pick-up piece 20 thereto.

The bushing 40 and the safety pin 30 are adapted to fix the pick-up piece 20 and the arm piece 10 as an integral body to each other at the time when the hood 3 is normally open, and if the rear end portion of the hood 3 is raised, they cut off to allow only the pick-up piece 20 to be rotated around the operating side hinge shaft 12. The bushing 40 is fitted to the safety pin 30 so as to prevent the safety pin 30 made of aluminum from being oxidized due to the contact with air and from rusting by means of the application of electricity and so as to improve the durability of the safety pin 30.

The bushing 40 is formed by coating Teflon on a copper mesh made of a soft metal mesh material, and it includes a body 41, incised slots 42 formed along the central periphery of the body 41 to conduct easy cutting thereof, and connection portions 43 formed between the neighboring incised slots 42.

The safety pin 30 is made of an aluminum material capable of providing given stiffness and easy cutting and includes a body 31 and a cutting groove 32 formed along the outer peripheral surface of the body 31.

The actuator 4 is located under the pick-up piece 20, and when the collision against a pedestrian is sensed, the actuator 4 is rapidly moved upwardly to raise the stopper locking groove 21 side of the pick-up piece 20 and at the same time to cut off the safety pin 30 and the bushing 40. After that, the pick-up piece 20 is rotated around the operating side hinge shaft 12 to allow the rear end portion of the hood 3 to be rapidly raised.

So as to prevent the pick-up piece 20 to which the hood 3 is connected from being descended after the pick-up piece 20 has been raised, the arm piece 10 has an elastic stopper 37 mounted on one side thereof, and the pick-up piece 20 has a stopper locking groove 38 formed on one side thereof in such a manner as to lock the elastic stopper 37 thereto.

Referring to an automobile hood active hinge device according to a second embodiment of the present invention, the active hinge device includes a safety pin 30a adapted to fix the arm piece 10 and the pick-up piece 20 and having a hollow body 31a and a cutting groove 32 formed along the outer peripheral surface of the hollow body 31a.

The safety pin 30a is light in weight because of the hollow body 31a, thereby achieving lightness.

Referring to an automobile hood active hinge device according to a third embodiment of the present invention, the active hinge device includes a safety pin 30b adapted to fix the arm piece 10 and the pick-up piece 20 and having a hollow body 31a, an incised slot 33 formed on one side of the hollow body 31a, and a cutting groove 32 formed along the outer peripheral surface of the hollow body 31a.

The safety pin 30b is light in weight because of the hollow body 31a, thereby achieving lightness, and when it is insertedly fitted to the bushing 40, it can be inserted in the state of being reduced in diameter through the incised slot 33, thereby achieving easy assembling.

Under the above-mentioned configuration, an explanation on the operation of the automobile hood active hinge device according to the present invention will be given in detail.

So as to open the hood 3 in a normal state, the arm piece 10 and the pick-up piece 20 are rotated around the opening side hinge shaft 11.

In more detail, the bushing 40 and the safety pin 30 are inserted into the through-hole 22 of the pick-up piece 20 and the coupling hole 14 of the arm piece 10 and maintained in a fixed state. The stopper locking groove 21 is locked to the stopper 13 to permit the arm piece 10 and the pick-up piece 20 to be rigidly coupled to each other at the time when the hood 3 is open.

If the automobile collides against a pedestrian during driving, by the way, the actuator 4 is operated to raise the pick-up piece 20 to which the hood 3 is connected.

That is, if the pick-up piece 20 is raised together with the rear end portion of the hood 3 through the operation of the actuator 4, the connection portions 43 of the bushing 40 and the incised slots 32 of the safety pin 30 cut off to cause the arm piece 10 and the pick-up piece 20 coupled to each other to be separated from each other, and as the actuator 4 is kept operated to raise the pick-up piece 20, the pick-up piece 20 is rotated around the operating side hinge shaft 12 to further raise the rear end portion of the hood 3.

As mentioned above, through the rotation of the pick-up piece 20 around the operating side hinge shaft 12, the rear end portion of the hood 3 is rapidly raised in the state where the front end portion thereof is fixed to the body of the automobile, without having any upward movement of the arm piece 10, so that if the hood 3 collides against a pedestrian, the impact-absorbing space is provided to ensure the safety of the pedestrian, and if the front glass of the automobile collides against the pedestrian, the rear end portion of the hood 3 is raised to make an air bag developed to the front glass, thereby ensuring the safety of the pedestrian.

After the pick-up piece 20 to which the automobile hood 3 is connected has been raised, it is descended due to its load, and at this time, it collides against the actuator 4. Alternatively, the elastic stopper 37 formed on one side of the arm piece 10 elastically spreads into the stopper locking groove 38 formed on the raised pick-up piece 20 and is inserted into the stopper locking groove 38, thereby preventing the pick-up piece 20 to which the hood 3 is connected from being descended.

According to the second embodiment of the present invention, the safety pin 30a of the active hinge device has the hollow body 31a, which provides lightness and easy cutting to improve the reliability of the operation of the active hinge device.

According to the third embodiment of the present invention, the safety pin 30b of the active hinge device has the hollow body 31a with the incised slot 33 formed thereon, so that it is inserted into the through-hole 22 and the coupling hole 14, in the state of being reduced in diameter through the incised slot 33, thereby achieving easy assembling and improving lightness.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An automobile hood active hinge device comprising:
an arm piece (10) rotatably coupled to an automobile body fixing stand;
a pick-up piece (20) rotatably coupled to the arm piece (10) ;
**characterized by**
a bushing (40) and a safety pin (30) coupled to a coupling hole (14) of the arm piece (10) and a through-hole (22)of the pick-up piece (20) to fix or separate the arm piece (10) and the pick-up piece (20) to each other or from each other, the bushing (40) being formed by coating Teflon on a copper metal mesh to prevent the corrosion of the safety pin (30) and having a body (41), incised slots (42) formed in the middle portion of the body (41) and connection portions (43) formed between the neighboring incised slots (42), and the safety pin (30) being made of an aluminum material and having a body (31) and a cutting groove (32)formed along the outer peripheral surface of the body (31); and
an actuator (4) adapted to cut off the safety pin (30) and the bushing (40) fixing the arm piece (10) and the pick-up piece (20) and at the same time to raise the rear end portion of the hood (3) at the time when an automobile collides against a pedestrian.

2. The automobile hood active hinge device according to claim 1, wherein the safety pin (30a) has a hollow body (31a) and an incised slot formed on one side of the hollow body, and the pick-up piece (20) coupled to the arm piece (10) by means of an operating side hinge shaft (12) has a stopper locking groove (38) formed on one side thereof in such a manner as to couple an elastic stopper (37) disposed on the arm piece (10) thereto.

3. The automobile hood active hinge device according to claim 1, wherein the elastic stopper (37) disposed on one side of the arm piece (10) is insertedly fitted to the stopper locking groove (38) formed on the pick-up piece (20) so as to prevent the pick-up piece (20) connected to the hood from being descended after raised.

## Patentansprüche

1. Eine aktive Gelenkvorrichtung für Automobilhauben, aufweisend:
Ein Armstück (10), das rotierbar mit einem Automobilkarosserie-Befestigungsaufbau gekoppelt ist;
ein Aufnehmerstück (20), das rotierbar mit dem Armstück (10) gekoppelt ist;
**gekennzeichnet durch**
eine Buchse (40) und einen Sicherheitsstift (30), der mit einem Koppelloch (14) des Armstücks (10) und einem Durchgangsloch (22) des Aufnehmerstücks (20) gekoppelt ist, um das Armstück (10) und das Aufnehmerstück (20) aneinander zu befestigen oder voneinander zu trennen, wobei die Buchse (40) **durch** das Beschichten einer Kupfermetallmasche mit Teflon gebildet wird, um die Korrosion des Sicherheitsstifts (30) zu verhindern, und einen Körper (41), eingebrachte Schlitze (42), die in dem mittleren Abschnitt des Körpers (41) gebildet sind, und Verbindungsabschnitte (43), die zwischen den benachbarten eingebrachten Schlitzen (42) gebildet sind, hat, und wobei der Sicherheitsstift (30) aus Aluminiummaterial hergestellt ist und einen Körper (31) und eine Schneiderille (32), die entlang der äußeren peripheren Oberfläche des Körpers (31) gebildet ist, hat; und
einen Aktuator (4), der angepasst ist, um den Sicherheitsstift (30) und die Buchse (40), die das Armstück (10) und das Aufnehmerstück (20) befestigt, abzuschneiden und um gleichzeitig den hinteren Endabschnitt der Haube (3) anzuheben, in dem Moment, in dem ein Automobil mit einem Fußgänger kollidiert.

2. Die aktive Gelenkvorrichtung für Automobilhauben nach Anspruch 1, wobei der Sicherheitsstift (30a) einen hohlen Körper (31 a) und einen eingebrachten Schlitz, der auf einer Seite des hohlen Körpers gebildet ist, hat, und das Aufnehmerstück (20), das mittels einer Bedienungs-Seitengelenkwelle (12) mit dem Armstück (10) gekoppelt ist, eine Verschlussriegelrille (38) hat, die auf einer Seite davon derart gebildet ist, dass sie einen elastischen Schließer (37), der an dem Armstück (10) angeordnet ist, damit koppelt.

3. Die aktive Gelenkvorrichtung für Automobilhauben nach Anspruch 1, wobei der elastische Schließer (37), der auf einer Seite des Armstücks (10) angeordnet ist, durch Einstecken in der Verschlussriegelrille (38), die an dem Aufnehmerstück (20) gebildet ist, befestigt ist, um so zu verhindern, dass das Aufnehmerstück (20), das mit der Haube verbunden ist, nach dem Anheben abgesenkt wird.

## Revendications

1. Dispositif de charnière active de capot d'automobile, comprenant :
une pièce de bras (10) couplée à rotation à un support de fixation à la carrosserie de l'automobile ;
une pièce réceptrice (20) couplée à rotation à la pièce de bras (10) ;
**caractérisé par** :
une douille (40) et une broche de sécurité (30) couplées à un trou de couplage (14) de la pièce de bras (10) et à un trou traversant (22) de la pièce réceptrice (20) pour fixer l'une à l'autre la pièce de bras (10) et la pièce réceptrice (20) ou les séparer l'une de l'autre, la douille (40) étant formée par application de Téflon sur un treillis métallique en cuivre pour empêcher la corrosion de la broche de sécurité (30) et ayant un corps (41), des fentes incisées (42) formées dans la partie centrale du corps (41) et des parties de raccordement (43) formées entre les fentes incisées voisines (42), et la broche de sécurité (30) étant constituée d'un matériau de type aluminium et ayant un corps (31) et une rainure de coupe (32) formée le long de la surface périphérique externe du corps (31) ; et
un actionneur (4) pour couper la broche de sécurité (30) et la douille (40) fixant la pièce de bras (10) et la pièce réceptrice (20) et, en même temps, pour relever la partie d'extrémité arrière du capot (3) au moment où une automobile heurte un piéton.

2. Dispositif de charnière active de capot d'automobile selon la revendication 1, dans lequel la broche de sécurité (30a) a un corps creux (31a) et une fente incisée formée sur un côté du corps creux, et la pièce réceptrice (20) couplée à la pièce de bras (10) au moyen d'un arbre de charnière côté actionnement (12) présente une rainure de verrouillage de butoir (38) formée sur un de ses côtés de manière à lui coupler un butoir élastique (37) disposé sur la pièce de bras (10).

3. Dispositif de charnière active de capot d'automobile selon la revendication 1, dans lequel le butoir élastique (37) disposé sur un côté de la pièce de bras (10) est inséré dans la rainure de verrouillage de butoir (38) formée sur la pièce réceptrice (20) de manière à empêcher la pièce réceptrice (20) raccordée au capot de descendre après être montée.
